(19) Europäisches Patentamt
European Patent Office
Office européen des brevets

(11) EP 1 141 110 B1

(12) EUROPÄISCHE PATENTSCHRIFT

(45) Veröffentlichungstag und Bekanntmachung des Hinweises auf die Patenterteilung:
**04.09.2002 Patentblatt 2002/36**

(21) Anmeldenummer: **99955921.4**

(22) Anmeldetag: **30.10.1999**

(51) Int Cl.[7]: **C08K 5/098**, C08K 5/20

(86) Internationale Anmeldenummer:
**PCT/EP99/08279**

(87) Internationale Veröffentlichungsnummer:
**WO 00/027912 (18.05.2000 Gazette 2000/20)**

(54) **VERWENDUNG VON AMIDEN AROMATISCHER CARBONSÄUREN ZUR DAUERHAFTEN VERBESSERUNG DER KLEBSTOFF- UND/ODER BESCHICHTUNGS-KOMPATIBILITÄT VON POLYOLEFIN-BASIERTEN FORMKÖRPERN, FASERN UND FOLIEN**

USE OF AMIDES OF AROMATIC CARBOXYLIC ACIDS FOR PERMANENTLY IMPROVING THE ADHESIVE AND/OR COATING COMPATIBILITY OF POLYOLEFIN-BASED MOULDED BODIES, FIBRES AND FILMS

UTILISATION D'AMIDES D'ACIDES CARBOXYLIQUES POUR L'AMELIORATION PERMANENTE DE LA COMPATIBILITE AVEC DES ADHESIFS ET/OU DES REVETEMENTS, DE CORPS MOULES, FIBRES ET FEUILLES A BASE DE POLYOLEFINES

(84) Benannte Vertragsstaaten:
**AT BE CH CY DE DK ES FI FR GB GR IE IT LI LU MC NL PT SE**

(30) Priorität: **10.11.1998 DE 19851691**

(43) Veröffentlichungstag der Anmeldung:
**10.10.2001 Patentblatt 2001/41**

(73) Patentinhaber: **Cognis Deutschland GmbH & Co. KG**
**40589 Düsseldorf (DE)**

(72) Erfinder:
- **BIRNBRICH, Paul**
  **D-42719 Solingen (DE)**
- **KLAMANN, Jörg-Dieter**
  **D-27574 Bremerhaven (DE)**
- **TENHAEF, Rolf**
  **D-40627 Düsseldorf (DE)**

(56) Entgegenhaltungen:
**US-A- 4 035 325** **US-A- 4 826 898**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 141 110 B1

Printed by Jouve, 75001 PARIS (FR)

## Beschreibung

### Gebiet der Erfindung

Die Erfindung betrifft die Verwendung von Amiden aromatischer Carbonsäuren zur dauerhaften Verbesserung der Klebstoff- und/oder Beschichtungs-Kompatibilität von Polyolefin-basierten Formkörpern, Fasern und Folien.

### Stand der Technik

Formgestaltete Werkstücke beliebiger Raumform, einschließlich Formkörpern, Fasern und Folien auf Polyolefinbasis finden heute in breitestem Umfange praktische Verwendung. Ein wichtiger Problembereich liegt hier in der Verbesserung der Oberflächeneigenschaften dieser aufgrund ihrer Struktur unpolaren Kohlenwasserstoffverbindungen. So ist die mangelnde Haftfestigkeit gegenüber Beschichtungen und Verklebungen ein zentrales Problem, zu dessen Lösung seit Jahrzehnten zahlreiche Vorschläge gemacht worden sind.

Es ist bekannt, daß die Kompatibilität der Kunststoff-Oberfläche gegenüber Beschichtungen und Verklebungen durch beispielsweise oxidative Nachbehandlungsverfahren wie Corona- oder Plasmabehandlung verbessert werden kann. Hierbei wird der Kunststoff in Gegenwart von Gasen und Entladungen an der Oberfläche oxidiert oder chemisch modifiziert, wodurch sich gewisse OberflächenEigenschaften des Kunststoffs modifizieren lassen. Diese Methoden erfordern jedoch neben einem hohen Energieeinsatz stets einen zusätzlichen Arbeitsgang und führen zu Ozonemissionen bei der Fertigung von Kunststoffteilen. Daneben sind chemische Vorbehandlungsverfahren wie z.B. das Behandeln mit Fluor- oder Chlorgas, mit Chromschwefelsäure oder Fluorsulfonsäure, usw. seit längerem bekannt.

**EP-B-372 890** beschreibt Fasern auf Polyolefin- oder Polyester-Basis mit einem mit der Oberfläche verhafteten Schmiermittel. Dieses Schmiermittel umfaßt eine Mischung aus (1) Fettsäurediethanolamid, (2) einem Polyether-modifizierten Silikon, (3) einem Sorbitan-Fettsäureester und (4) einem Metallsalz eines Alkylsulfonats; dabei liegen die Komponenten (1) bis (4) in speziellen Mengenverhältnissen vor. Gemäß Seite 3, Zeilen 20-26 wird die Mischung der Komponenten (1) bis (4) auf die Oberfläche aufgebracht. Diese Technik des Aufbringens der die vier Komponenten enthaltenden Mischung auf die Oberfläche bereits fertiger Fasern wird auch auf Seite 4, Zeilen 6-9 nochmals näher erläutert. Dort sind als Aufbring-Techniken genannt: a) der Einsatz von Rollen, b) ein Aufsprühen und c) das Eintauchen. Es handelt sich demnach um ein Verfahren, bei dem eine Mischung der Komponenten (1) bis (4) in einem zusätzlichen Verarbeitungsschritt auf die Oberfläche von Polyolefin-Formteilen aufgebracht wird. Der in Anspruch 1 der EP-B-372 890 verwendete Ausdruck "mit der Faseroberfläche verhaftet" ist demnach vom Fachmann klar in der Weise zu verstehen, daß es sich dabei lediglich um eine lockere und temporäre Haftung - etwa durch relativ schwache Adhäsionskräfte - handelt, keinesfalls aber um eine dauerhafte Verankerung.

Im Hinblick auf die sehr verbreiteten klassischen chemischen Nachbehandlungsverfahren wie Corona- und Plasmabehandlung ist dem Fachmann bekannt, daß sich keine genauen Aussagen über die ablaufenden Prozeßvorgänge machen lassen. Es gilt jedoch als erwiesen, daß sich oxidative Veränderungen der Oberfläche ergeben und dadurch gewisse "aktive Zentren" entstehen. Deren Konzentration geht jedoch in der Regel mit der Zeit zurück, so daß auch der Vorbehandlungseffekt nur über einen bestimmten Zeitraum, meist nicht über 72 Stunden hinaus, erhalten bleibt. (Vergleiche dazu etwa: **Klaus Stoeckert (Herausgeber), "Veredeln von Kunststoff-Oberflächen",** München 1974, Seite 137).

Den bisher referierten Methoden des Standes der Technik ist insgesamt gemeinsam, daß die angestrebten Oberflächen-Wirkungen in der Regel nur temporär vorhanden sind.

**EP-B-616 622** betrifft extrudierbare, kompostierbare Polymerzusammensetzungen, umfassend ein extrudierbares, thermoplastisches Polymer, Copolymer oder Mischungen davon, die ein abbaufördernedes System aus einem autooxidativen Bestandteil und einem Übergangsmetall enthält. Das autooxidative System umfaßt dabei eine Fettsäure, eine substituierte Fettsäure oder Derivate oder Mischungen davon, wobei die Fettsäure 10 bis 22 C-Atome aufweist und mindestens 0,1 Gew.- % ungesättigter Verbindungen und mindestens 0,1 Gew.-% freie Säure enthält. Das Übergangsmetall ist in der Zusammensetzung in einer Menge von 5-500 ppm in Form eines Salzes enthalten und ausgewählt aus der Gruppe Kobalt, Mangan, Kupfer, Cer, Vanadium und Eisen. Die Zusammensetzung soll in Form einer Folie einer Dicke von etwa 100 Mikron bei 60 °C und einer relativen Feuchtigkeit von mindestens 80% innerhalb von 14 Tagen oxidativ zur Versprödung abbaubar sein.

**WO 97/12694** und **WO 98/42776** beschreiben die Verwendung von Amphiphilen zur dauerhaften Verbesserung der Klebstoff- und/oder Beschichtungs-Kompatibilität von Polyolefin-basierten Formkörpern, Fasern und Folien. Dabei unterwirft man eine Mischung enthaltend (a) überwiegend ein oder mehrere Polyolefine, (b) ein oder mehrere migrationsfähiger Amphiphile und (c) ein oder mehrere Übergangsmetall-Verbindungen, bei Temperaturen im Bereich von 180 bis 320 °C auf übliche Weise einer formgebenden Verarbeitung, beispielsweise der Extrusion. Es ist offenbart, daß als Komponente b) insbesondere Dialkanolamide ungesättigter Fettsäuren, etwa Ölsäurediethanolamid oder Linolsäurediethanolamid, eingesetzt werden können. Im Hinblick auf die Natur der Komponente (c) offenbart WO 97/12694

hinsichtlich des darin enthaltenen Übergangsmetalls insbesondere Co, Zr, Fe, Pb, Mn, Ni, Cr, V und Ce, WO 98/42776 insbesondere Ti und Sn.

## Beschreibung der Erfindung

Aufgabe der vorliegenden Erfindung war es, Arbeitsmittel bereitzustellen, mit denen die Klebstoff- und/oder Beschichtungs-Kompatibilität von Polyolefin-basierten Formkörpern, Fasern und Folien nachhaltig und dauerhaft verbessert werden kann. Mit anderen Worten war es Ziel der vorliegenden Erfindung, Arbeitsmittel bereitzustellen, um eine permanente Verbesserung der Haftfestigkeit von Polyolefinoberflächen gegenüber Verklebungen und/oder Beschichtungen sicherzustellen. Die Erfindung will dabei insbesondere die Einstellung hochfester Verklebungen ermöglichen, die das Auftreten von unerwünschten Adhäsionsbrüchen ausschließen und eine Zerstörung der Klebstoffuge nur über einen Cohäsionsbruch bzw. über einen kombinierten Cohäsions/-Adhäsionsbruch sicherstellen. Insbesondere sollte die Wirkung der aus dem Stand der Technik bekannten Amphiphile zur dauerhaften Verbesserung der Klebstoff- und/oder Farbstoff-Kompatibilität Polyolefinbasierter Formkörper, Fasern und Folien quantitativ verbessert werden.

Gegenstand der vorliegenden Erfindung ist die Verwendung von Carbonsäureamiden zur dauerhaften Verbesserung der Klebstoff- und/oder Beschichtungs-Kompatibilität von Polyolefin-basierten Formkörpern, Fasern und Folien, wobei man eine Mischung enthaltend

a) überwiegend ein oder mehrere Polyolefine,

b) 0,01 bis 20 Gew.-% - bezogen auf die Polyolefine - ein oder mehrere Carbonsäureamide und

c) 0,01 bis 1000 ppm ein oder mehrere Übergangsmetall-Verbindungen - Metallgehalt der Übergangsmetall-Verbindungen bezogen auf die Polyolefine -

bei Temperaturen im Bereich von 180 bis 330 °C auf übliche Weise einer formgebenden Verarbeitung wie Extrusions-, Kalandrier-, Spritzguß-, Blasformverfahren und dergleichen unterwirft, mit der Maßgabe, daß man die Carbonsäureamide b) auswählt aus der Klasse der Amide aromatischer Carbonsäuren.

Unter "Übergangsmetallen" werden im Rahmen der vorliegenden Erfindung alle Übergangsmetalle im engeren Sinne verstanden (vergl. z.B. Römpps ChemieLexikon, Stuttgart 1977, S. 3717), darüber hinaus die Metalle Zinn (Sn) und Blei (Pb).

Die erfindungsgemäß einzusetzenden Amide aromatischer Carbonsäuren b) leiten sich von aromatischen Carbonsäuren ab. Hierbei handelt es sich um Verbindungen, die ein aromatisches Grundgerüst aufweisen, das gegebenfalls durch ein oder mehrere Alkylreste substituiert sein kann, wobei sich an diesem Grundgerüst und/oder an den Alkylsubstituenten ein oder mehrere Carboxylfunktionen befinden.

Hinsichtlich des aromatischen Grundgerüstes der den Verbindungen b) zu Grunde liegenden Carbonsäuren bestehen an sich keinerlei Beschränkungen. So kann der aromatische Baustein der Verbindungen b) sich vom Benzol ableiten, er kann sich aber auch von einem Polycyclus wie etwa Naphthalin, Anthracen usw. ableiten.

Beispiele für besonders geeignete aromatische Carbonsäuren, die den Verbindungen b) zu Grunde liegen, sind Benzoesäure, Phthalsäure, Terephthalsäure.

In einer Ausführungsform sind die Verbindungen b) durch die allgemeine Struktur (I) charakterisiert:

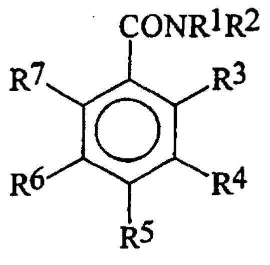

(I)

In Formel (I) bedeuten:

- Der Rest $R^1$ eine Gruppe $-(CH_2)_n-OH$, wobei n eine Zahl im Bereich 1 bis 6 ist,
- der Rest $R^2$ Wasserstoff, eine Alkylgruppe mit 1 bis 3 C-Atomen oder eine Gruppe $-(CH_2)_n-OH$, wobei n eine Zahl im Bereich 1 bis 6 ist,

- die Reste $R^3$ bis $R^7$ - unabhängig voneinander - Wasserstoff, eine Alkylgruppe mit 1 bis 12 C-Atomen oder eine Gruppe $-CONR^1R^2$, worin $R^1$ und $R^2$ die oben genannte Bedeutung haben.

In einer Ausführungsform beträgt die Gesamtzahl der Gruppen $-CONR^1R^2$ in Verbindungen der Struktur (I) höchstens drei. In einer weiteren Ausführungsform beträgt die Gesamtzahl der Gruppen $-CONR^1R^2$ in Verbindungen der Struktur (I) höchstens zwei.

Diese Verbindungen (I) können sowohl einzeln als auch in Kombination miteinander eingesetzt werden. Die genannten Verbindungen werden insbesondere in technischer Qualität eingesetzt.

Die erfindungsgemäß einzusetzenden Verbindungen b) sind zur Migration befähigt. Darunter ist zu verstehen, daß diese Verbindungen in der Lage sind, im Zuge der Herstellung durch beispielsweise Extrusionsverfahren an die Oberfläche des resultierenden Polyolefin-Formkörpers zu gelangen. Sie reichern sich dadurch an der Oberfläche bzw. den Oberflächen-nahen Bereichen der Kunststoff-Matrix an, was durch sukzessives Abtragen von Oberflächenschichten in der Größenordnung von jeweils wenigen Nanometern und anschließende Abscan-Techniken von der Anmelderin verifiziert wurde.

Durch den erfindungsgemäßen Einsatz der genannten speziellen Carbonsäureamide b) ist gewährleistet, daß Beschichtungen bzw. Verklebungen permanent und ohne zusätzliche Vorbehandlung am Kunststoff haften können. Dabei bleiben einmal eingestellte Klebstoff- und/oder Beschichtungs-Kompatibilitäts-Werte über lange Zeiträume erhalten oder steigen manchmal sogar noch bei weiterführender Lagerung an. Im Hinblick auf die Klebstoffe und Beschichtungsmassen, die mit den erfindungsgemäß Oberflächen-modifizierten Polyolefinen in Kontakt gebracht werden können, so daß dabei eine dauerhafte Verklebung bzw. Beschichtung realisiert ist, gibt es erfindungsgemäß an sich keinerlei Beschränkungen. So können im Hinblick auf die Klebstoffe alle dem Fachmann vertrauten Klebstoffe, insbesondere der handelsüblichen Klebstoffe eingesetzt werden. Im Hinblick auf Beschichtungen sei insbesondere auf die Lacke aufmerksam gemacht. Lacke sind flüssige oder pulverformig-feste Substanzen, die in dünner Schicht auf Gegenstände appliziert werden und die durch chemische Reaktion und/oder physikalische Vorgänge einen auf den Oberflächen der Objekte haftenden festen Film bilden, der dekorative und/oder schützende Funktionen hat. Zu den Beschichtungen zählt auch das Aufbringen von Druckfarben, da Druckfarben in einer Bindemittelschicht auf zu bedrukkende Substrate aufgebracht werden, wobei die Haftung am Formkörper durch das Bindemittel, das eine Beschichtung ausbildet, vermittelt wird.

Der Einsatz der Mischung enthaltend die Komponenten a), b) und c) erfolgt durch übliche und dem Fachmann wohlvertraute formgebende Verarbeitungstechniken wie Extrusions-, Kalandrier-, Spritzgußverfahren und dergleichen. Dabei ist es im Rahmen der Lehre der vorliegenden Erfindungen bevorzugt, wenn im Zuge der formgebenden Verarbeitung die Schmelze der Mischung enthaltend die Komponenten a), b) und c) mit Sauerstoff - insbesondere Luftsauerstoff - in Kontakt kommt. Dies ist beispielsweise beim Extrudieren dann der Fall, wenn die Schmelze den Extruder durch die Austrittsdüse verläßt. Die genannte bevorzugte Ausführungsform ermöglicht, daß - gegebenenfalls katalytisch unterstützte - oxidative Prozesse sowie weitere Sekundärreaktionen stattfinden können. Dabei kann (Luft-)Sauerstoff einerseits an der Oberfläche selbst wirken, andererseits auch im Inneren des Kunststoffs - insbesondere in Oberflächen-nahen Bereichen -, wohin er durch Diffusion gelangen kann.

Die Kombination der erfindungsgemäßen Lehre, die zur Ausbildung erhöhter Beschichtungs- bzw. Verklebungs-Kompatibilitäts-Werte führt, mit an sich bekannten Technologien zur Verbesserung der Beschichtungs- bzw. Verklebungs-Kompatibilität auf Polyolefinoberflächen fällt in den Rahmen der erfindungsgemäßen Lehre. So können die Oberflächen der gemäß der vorliegenden Erfindung hergestellten Polyolefine zusätzlich sowohl mechanisch wie chemisch und/oder physikalisch behandelt werden. Erforderlich ist das allerdings in aller Regel nicht.

Wie bereits gesagt werden die Verbindungen b) bei der formgebenden Verarbeitung der Polyolefine a) in Kombination mit Übergangsmetall-Verbindungen c) eingesetzt. Dabei beträgt die Menge der Übergangsmetall-Verbindung - Metallgehalt der Übergangsmetall-Verbindung bezogen auf die Polyolefine - 0,01 bis 1000 ppm.

Im Hinblick auf die Art der Übergangsmetall-Verbindungen besteht dabei an sich keine besondere Einschränkung. Demnach können im Rahmen der Lehre der vorliegenden Erfindung prinzipiell alle dem Fachmann bekannten Übergangsmetallverbindungen eingesetzt werden. In einer Ausführungsform setzt man als Übergangsmetall-Verbindungen Übergangsmetallsalze ein, vorzugsweise Salze auf Basis von organischen Säuren mit 6 bis 22 C-Atomen. In einer weiteren Ausführungsform setzt man die Übergansmetall-Verbindungen in einer - Menge ein, die unterhalb von 5 ppm - Metallgehalt der Übergangsmetall-Verbindung bezogen auf die Polyolefine - liegt. In einer weiteren Ausführungsform setzt man solche Übergangsmetallverbindungen c) ein, deren Metalle aus der Gruppe Co, Zr, Fe, Pb, Mn, Ni, Cr, V, Ce, Ti und Sn gewählt sind.

Gewünschtenfalls setzt man neben den genannten obligatorischen Übergangsmetall-Verbindungen noch weitere Verbindungen ein, die dem Fachmann als Katalysatoren für oxidative Prozesse bekannt sind.

In einer bevorzugten Ausführungsform stellt man das Gewichtsverhältnis der Verbindungen b) zu dem Metallgehalt der Übergangsmetall-Verbindungen c) im Bereich von 10 : 0,1 und 10 : $10^{-7}$ ein. Bevorzugt ist ein Bereich von 10 : 0,02 und 10 : $10^{-6}$ und insbesondere 10 : 0,01 und 10 : $10^{-5}$.

Die erfindungsgemäße Verwendung der speziellen Carbonsäureamide b) geschieht im Rahmen üblicher formgebender Verarbeitungsprozesse wie Extrusions-, Kalandrier-, Spritzgußverfahren und dergleichen. Dabei kann es gewünscht sein, eine vorkonfektionierte Mischung der Komponenten a), b) und c) einzusetzen. Mitverwendete weitere übliche Hilfsstoffe, die sich bei der Verarbeitung von Kunststoffen allgemein bewährt haben und die dem Fachmann bekannt sind, beispielsweise Slipmittel, Antistatika, Gleitmittel, Trennmittel, UV-Stabilisatoren, Antioxidantien, Füllstoffe, Brandschutzmittel, Entformungsmittel, Nukleirungsmittel und Antiblockmittel können entsprechend in getrennter Form vorkonfektioniert und bei der abschließenden Aufinischung der Fertigprodukte zugegeben werden. Auch die in der Praxis übliche Technik, die genannten Hilfsstoffe in einer Form einzusetzen, in der sie in Komponente a) bereits ganz oder teilweise enthalten sind, wird ausdrücklich in den Rahmen der vorliegenden Erfindung miteinbezogen.

Es kann aber - beispielsweise bei Anwendung der Extrudiertechnik - auch gewünscht sein, die Komponenten b) und/oder c) und/ oder andere Additive ganz oder teilweise direkt in die Polyolefinschmelze am Extruder einzudosieren, so daß die Mischung der Komponenten a), b) und c) - und gegebenenfalls weiterer Hilfsstoffe - nicht schon von vornherein als Vorkonfektionat vorhanden ist, sondern erst im Extruder selbst vorliegt. Eine derartige Technik bietet sich beispielsweise dann an, wenn die der Polymerschmelze zuzudosierenden Verbindungen b) in flüssiger Form vorliegen und ein Einspritzen dieser Komponente einfacher ist, als eine Vorkonfektionierung.

Es kann auch gewünscht sein - obgleich zur Erzielung des erfindungsgemäßen Effektes nicht erforderlich - im Anschluß an den erfindungsgemäßen Einsatz der Komponenten a) - c) - auf übliche Weise eine Corona- oder Plasmabehandlung vorzunehmen.

Als oleophiles Polyolefin-Basismaterial eigenen sich an sich alle heute bekannten Polymer- und Copolymertypen auf Ethylen- beziehungsweise Propylen-Basis.

Auch Abmischungen reiner Polyolefine mit Copolymeren sind grundsätzlich geeignet, solange die Migrationsfähigkeit der Verbindungen b) im Sinne der erfindungsgemäßen Erfindung erhalten bleibt und damit ihre Anreicherung im Bereich der Feststoffoberflächen sichergestellt ist. Für die erfindungsgemäße Lehre besonders geeignete Polymertypen sind in der nachfolgenden Zusammenstellung aufgezählt:

Poly(ethylene) wie HDPE (high density polyethylene), LDPE (low density polyethylene), VLDPE (very low density polyethylene), LLDPE (linear low density polyethylene), MDPE (medium density polyethylene), UHMPE (ultra high molecular polyethylene), VPE (vernetztes Polyethylen), HPPE (high pressure polyethylene); isotaktisches Polypropylen; syndiotaktisches Polypropylen; Metallocen-katalysiert hergestelltes Polypropylen, schlagzäh-modifiziertes Polypropylen, Random-Copolymere auf Basis Ethylen und Propylen, Blockcopolymere auf Basis Ethylen und Propylen; EPM (Poly[ethylen-co-propylen]); EPDM (Poly[ethylen-copropylen-co-nichtkonjugiertes Dien]).

Weitere geeignete Polymertypen sind: Poly(styrol); Poly(methylstyrol); Poly(oxymethylen); Metallocen-katalysierte alpha-Olefin- oder Cycloolefin-Copolymere wie Norbomen-Ethylen-Copolymere; Copolymere, die zu mindestens 80 % Ethylen und/oder Styrol enthalten und zu weniger als 20 % Monomere wie Vinylacetat, Acrylsäureester, Methacrylsäureester, Acrylsäure, Acrylnitril, Vinylchlorid. Beispiele solcher Polymeren sind: Poly(ethylen-co-ethylacrylat), Poly(ethylen-co-vinylacetat), Poly(ethylen-co-vinylchlorid), Poly(styrol-co-acrylnitril). Geeignet sind weiterhin Pfropfcopolymere sowie Polymerblends, das heißt, Mischungen von Polymeren, in denen unter anderem die vorgenannten Polymere enthalten sind, beispielsweise Polymerblends auf Basis von Polyethylen und Polypropylen.

Im Rahmen der vorliegenden Erfindung sind Homo- und Copolymere auf Basis von Ethylen und Propylen besonders bevorzugt. In einer Ausführungsform der vorliegenden Erfindung setzt man dementsprechen als Polyolefin ausschließlich Polyethylen ein, in einer anderen Ausführungsform ausschließlich Polypropylen, in einer weiteren Ausfiihrungsform Copolymere auf Basis von Ethylen und Propylen.

Das Aufbringen von Beschichtungen oder Verklebungen der nach dem erfindungsgemäßen Verfahren erhaltenen Oberflächen-modifizierten Polyolefin-basierten Formkörper und Folien kann an sich nach allen dem Fachmann bekannten einschlägigen Methoden erfolgen.

In einer Ausführungsform setzt man als Komponente a) Polyethylen ein. Sofern es sich dabei um HDPE (high density polyethylene) handelt, stellt man bei der formgebenden Verarbeitung vorzugsweise eine Temperatur im Bereich von 200 bis 300 °C, bei Ruß enthaltendem HDPE insbesondere 250 bis 300 °C ein, sofern es sich um LDPE (low density polyethylene) handelt, stellt man bei der formgebenden Verarbeitung vorzugsweise eine Temperatur im Bereich von 180 bis 260 °C und insbesondere 200 bis 260 °C ein.

Bei Extrusionsverfahren gelten die gerade für die HDPE- und LDPE-Verarbeitung gemachten Temperaturangaben insbesondere für die Temperatur der Austrittsdüse.

Sofern die formgebende Verarbeitung der Mischung der Komponenten a), b) und c) durch Extrusion geschieht, kühlt man den Polyolefinsformkörper unmittelbar nach dem Verlassen der Austrittsdüse vorzugsweise innerhalb eines Zeitraums von 0,1 bis 5,0 Sekunden um maximal 50 °C ab. Hinsichtlich dieser Temperaturdifferenz von 50 °C - nachfolgend auch ΔT50 genannt - gilt also die Gleichung

$$\Delta T50 = T_{Austrittsdüse} - T_{polyolefinoberfläche}$$

In dieser Gleichung ist unter TAustrittsdüse die Temperatur der Austrittsdüse des Extruders zu verstehen, unter Tpolyolefinoberfläche die Oberflächentemperatur des extrudierten Polyolefinformkörpers zu verstehen, die berührungslos, beispielsweise unter Einsatz einschlägig bekannter Infrarot-Techniken, gemessen wird (etwa mit einem Infrarot-Thermometer "IR-TA/Handy 1000" der Firma Chino).

Besonders bevorzugt ist es, den Polyolefinformkörper unmittelbar nach dem Verlassen der Austrittsdüse des Extruders innerhalb eines Zeitraums von 1,0 bis 5,0 Sekunden und insbesondere von 1,7 bis 5,0 Sekunden um maximal 50 °C abzukühlen.

Unter der Voraussetzung, daß der Polyolefinformkörper sich ab dem Verlassen der Austrittsdüse des Extruders mit konstanter Geschwindigkeit bewegt, kann die genannte Zeitskala in einfacher Weise in eine Entfernungsskala transformiert werden. Hierzu wird die bekannte Gleichung v = s / t (Geschwindigkeit = Wegstrecke geteilt durch Zeit) herangezogen, aus der sich durch Umformung s = v * t (Wegstrekke = Geschwindigkeit mal Zeit) ergibt, aus der man ersieht, daß Wegstrecke s (d.h. Entfernung von der Austrittsdüse) und Zeit t einander proportional sind. Der Nullpunkt der Entfemungsskala liegt definitionsgemäß unmittelbar an der Austrittsstelle der Düse.

Die unter Einsatz der Carbonsäureamide b) erhältlichen Polyolefinformkörper, insbesondere die durch Extrusion zugänglichen Granulate, können ihrerseits dazu verwendet werden, als sogenannte Masterbatches bei der Verarbeitung von Massenkunststoffen eingesetzt zu werden.

Ein weiterer Gegenstand der Erfindung ist ein Verfahren zur Herstellung von verklebten und/oder beschichteten Polyolefin-basierten Formkörpern, Fasern und Folien, wobei man man eine Mischung enthaltend

a) überwiegend ein oder mehrere Polyolefine,

b) 0,01 bis 20 Gew.-% - bezogen auf die Polyolefine - ein oder mehrere Carbonsäureamide und

c) 0,01 bis 1000 ppm ein oder mehrerer Übergangsmetall-Verbindungen - Metallgehalt der Übergangsmetall-Verbindungen bezogen auf die Polyolefine

bei Temperaturen im Bereich von 180 bis 330 °C auf übliche Weise einer formgebenden Verarbeitung wie Extrusions-, Kalandrier-, Spritzguß-, Blasformverfahren und dergleichen unterwirft und die dabei erhaltenen Polyolefin-basierten Formkörpern, Fasern und Folien mit verbesserter Klebstoff- und/oder Beschichtungs-Kompatibilität anschließend auf übliche Weise mit einem Klebstoff und/oder einer Beschichtungsmasse in Kontakt bringt, mit der Maßgabe, daß man die Carbonsäureamide b) auswählt aus der Klasse der Amide aromatischer Carbonsäuren.

**Beispiele**

**1. Eingesetzte Materialien**

**1.1. Polyolefine (a)**

Lupo: Low-Density-Polyethylen (Handelsprodukt "Lupolen 1800 H" Handels-produkt der Firma Elenac)

**1.2. Additive (b)**

TDA: Terephthalsäurediethanolamid
BDA Benzoesäurediethanolamid

**1.3. Übergangsmetall-Verbindungen (c)**

Es wurde eine Mischung von Cobalt(II)-Octoat und Zirkonium (II)-Octoat eingesetzt. Hierzu wurde eine Mischung von 4,3 g einer Lösung von Cobalt(II)-Octoat in Toluol (mit einem Gehalt von 6 Gew.-% Cobalt), 10,3 g einer Lösung von Zirkonium (II)-Octoat in Toluol (mit einem Gehalt von 6 Gew.-% Zirkonium) und 10,3 g Toluol hergestellt. Von dieser Mischung wurden 0,3 g pro 600 g Komponente a) eingesetzt.

**2. Herstellung von Oberflächen-modifiziertem Polyethylen gemäß dem Verfahren der Erfindung**

Zur Überprüfung der Klebstoff-Kompatibilitäts-Eigenschaften von Oberflächen-modifiziertem Polyethylen wurden zunächst Polyethylen-Bänder hergestellt. Dazu wurden jeweils

- 600 g Polyethylen-Granulat a),
- Additiv b) und
- Übergangsmetall-Verbindung c)

vermengt. Art und Menge der jeweils eingesetzten Komponenten b) und c) ist Tabelle 1 zu entnehmen. Diese Mischungen wurden durch einen Trichter in einen Extruder eingebracht. Eingesetzt wurde dabei ein Doppelschneckenextruder DSK 42/7 der Firma Brabender OHG (Duisburg). Ein Extruder ist - wie dem Fachmann hinlänglich bekannt - eine Kunststoff-Verarbeitungsmaschine, welche zum kontinuierlichen Mischen und Plastifizieren sowohl von pulver- als auch granulatförmigen Thermoplasten geeignet ist. Unter dem Einfülltrichter befindet sich neben einer Wasserkühlung, die ein verfrühtes Schmelzen des Granulates bzw. Pulvers verhindern soll, auch eine gegenläufige Doppelschnecke, die der Länge nach in drei Heizzonen aufgeteilt ist. Die Temperatur der Heizzonen und die Drehzahl der Doppelschnecke lassen sich über einen Datenverarbeitungs-Plast-Corder PL 2000 regeln, der über eine PC-Schnittstelle mit dem Extruder verbunden is. Für die Herstellung der Polyethylenbänder wurden die folgenden Temperaturen eingestellt: Heizzonen I-III jeweils 230°C, wobei die drei Heizzonen luftgekühlt waren, um die Temperaturen konstant zu halten.

Das Polyethylen-Granulat inclusive der jeweiligen Komponenten b) und c) wurde automatisch durch die gegeneinander laufende Doppelschnecke in den Extruder eingezogen und entlang der Schnecke befördert. Die Drehzahl betrug dabei 50 Umdrehungen pro Minute. Dadurch war eine relativ lange Verweilszeit im Extruder und dementsprechend eine gute Durchmischung und Homogenisierung gewährleistet. Diese homogene und praktisch bläschenfreie Mischung gelangte schließlich in eine Düse, die eine vierte Heizzone darstellt. Die Temperatur dieser Austrittsdüse ist Tabelle 1 zu entnehmen.

Nach dem Austritt aus der Düse floß die heiße Mischung auf ein Transportband, dessen Geschwindigkeit so eingestellt wurde, daß beim Abkühlen an der Luft ein glattes und gleichmäßig dickes und breites Band entstand. Bei den hier beschriebenen Arbeiten wurde die Geschwindigkeit so eingestellt, daß das Polyethylenband etwa 35 mm breit und etwa 0,35 mm dick war. Aus diesem Material wurden quadratische Prüfkörper (25 x 25 mm) ausgestanzt und für die unten näher beschriebenen Klebeversuche eingesetzt.

**3. Klebe- und Zerreiß-Versuche**

**3.1. Herstellung der Prüflinge**

Die gemäß 2) hergestellten extrudierten Bänder wurden 24 Stunden bei Raumtemperatur (20 °C) gelagert. Anschließend wurden quadratische Polyethylenstücke von 25 x 25 mm zwischen zwei Holzbrettchen mit den Maßen 100 x 25 mm verklebt. Die Verklebung hatte dabei eine Dicke von 2 mm. Die Klebefläche betrug exakt 25 x 25 = 625 mm 2. Es sei darauf hingewiesen, daß die Versuchsanordnung der entspricht, die auf S. 21 der oben genannten WO 98/42776 skizziert wurde (abgesehen davon, daß dort Polypropylenprüfstücke und hier Polyethylenprüfstücke eingesetzt werden).

Als Klebstoff wurde ein Zweikomponentenklebstoff eingesetzt (Polyurethan-Kleber "Makroplast" der Firma Henkel KGaA/Düsseldorf). Dazu wurden in einer Aluminiumschale die beiden Reaktivkomponenten (Harz = UK 8109; Härter = UK 5400) im Verhältnis Harz : Härter von 5:1 angerührt. Die Topfzeit betrug etwa 1 Stunde.

Nach entsprechender Lagerung wurden von jedem Band Streifen mit einer Breite von 25 mm abgeschnitten und mit Hilfe einer Schablone zwischen zwei Holzbrettchen beidseitig verklebt. Es wurden dabei 5 Verklebungen von jedem Kunststoffband angefertigt. Die Verwendung einer Schablone garantierte dabei die Einhaltung der gewünschten Klebefläche zwischen dem modifiziertem Kunststoff und den Brettchen. Zur Fixierung des Prüflings wurden dabei Holzklammern verwendet. Überschüssiger Kleber wurde entfernt.

**3.2. Zerreiß-Versuche**

Die gemäß 3.1.) hergestellten Prüflinge wurden etwa 3 bis 4 Tage bei 20 °C gelagert, um sicherzustellen, daß der Zweikomponentenklebstoff völlig ausgehärtet war. Zur Messung der Zugscherkräfte wurde anschließend eine Universalprüfmaschine der Firma Zwick verwendet. Die Geschwindigkeit, mit der der Prüfling auf Zug beansprucht wurde, betrug 15 mm/min. Die verklebten Holzspatel (= Prüflinge) wurden in die Klemmbacken der Universalprüfmaschine eingespannt und mit der vorgegebenen Prüfgeschwindigkeit auseinandergezogen. Dabei wurde sichergestellt, daß die Prüflinge stets senkrecht und exakt in der Mitte des Prüfgerätes angeordnet waren. Die erzielten Versuchsergebnisse sind in den Tabelle 1 zusammengestellt. Sämtliche Ergebnisse sind Mittelwerte aus jeweils 5 Versuchen.

<u>Zu den Spalten der Tabelle 1</u>:

Nr. Versuchs-Nummer (B= erfindungsgemäß; V=Vergleich)

a) Komponente a) (Polyolefin)

b) Komponente b); in der Spalte "%" ist angegeben, in welcher Menge die jeweilige Verbindung - Gew.-% bezogen auf die Komponente a) - eingesetzt wurde

c) Komponente c); in der Spalte "ppm Me" ist angegeben, in welcher Menge - angegeben in ppm (parts per million) - das Übergangsmetall der Übergangsmetallverbindung - bezogen auf die Komponente a) - eingesetzt wurde

T/Düse Temperatur der Austrittsdüse in °C

ZSG Wert der Zugscherfestigkeit, ermittelt bei den ZerreißVersuchen. Die Angaben sind in Newton pro Quadratmillimeter.

Tabelle 1:

| Nr. | a) | b) % | Verbindung | c) ppm Me | Verbindung | T/Düse °C | ZSG |
|---|---|---|---|---|---|---|---|
| V1 | Lupo | - | - | 17,6 | Co/Zr-Octoat | 250 | 0,20 |
| B1 | Lupo | 1,0 | TDA | 17,6 | Co/Zr-Octoat | 250 | 0,49 |
| B2 | Lupo | 0,5 | BDA | 17,6 | Co/Zr-Octoat | 250 | 0,99 |
| B3 | Lupo | 1,0 | BDA | 17,6 | Co/Zr-Octoat | 250 | 1,79 |

Aus Tabelle 1 geht hervor, daß beim Einsatz der erfindungsgemäßen Amide aromatischer Carbonsäuren (siehe die Beispiele B1 bis B3) deutlich bessere Resultate erzielt wurden, als in Abwesenheit von Additiven (siehe Vergleichsbeispiel V1).

## Patentansprüche

**1.** Verwendung von Carbonsäureamiden zur dauerhaften Verbesserung der Klebstoff- und/oder Beschichtungs-Kompatibilität von Polyolefin-basierten Formkörpern, Fasern und Folien, wobei man eine Mischung enthaltend

a) überwiegend ein oder mehrere Polyolefine,

b) 0,01 bis 20 Gew.-% - bezogen auf die Polyolefine - ein oder mehrere Carbonsäureamide und

c) 0,01 bis 1000 ppm ein oder mehrere Übergangsmetall-Verbindungen - Metallgehalt der Übergangsmetall-Verbindungen bezogen auf die Polyolefine -

bei Temperaturen im Bereich von 180 bis 330 °C auf übliche Weise einer formgebenden Verarbeitung wie Extension-, Kalandrier-, Spritzguß-Blasformverfahren und dergleichen unterwirft, **dadurch gekennzeichnet, daß** man die Carbonsäureamide b) auswählt aus der Klasse der Amide aromatischer Carbonsäuren.

**2.** Verwendung nach Anspruch 1, wobei man als Komponente a) Polyethylen einsetzt.

**3.** Verwendung nach Anspruch 1 oder 2, wobei man die formgebende Verarbeitung der Mischung der Komponenten a), b) und c) in einem Extruder vornimmt, wobei man den Polyolefinformkörper unmittelbar nach dem Austritt aus der Austrittsdüse innerhalb eines Zeitraums von 0,1 bis 5,0 Sekunden maximal um 50 °C abkühlt

**4.** Verwendung nach einem der Ansprüche 1 bis 3, wobei man solche Übergangsmetallverbindungen c) einsetzt, deren Metalle aus der Gruppe Co, Zr, Fe, Pb, Mn, Ni, Cr, V, Ce, Ti und Sn gewählt sind.

**5.** Verwendung nach einem der Ansprüche 1 bis 4, wobei man die Übergangsmetall-Verbindungen c) auswählt aus

der Gruppe der Übergangsmetallsalze.

**6.** Verwendung nach einem der Ansprüche 1 bis 5, wobei man die Übergangsmetall-Verbindungen c) in einer Menge einsetzt, die unterhalb von 5 ppm - Metallgehalt der Übergangsmetall-Verbindungen c) bezogen auf die Polyolefine a) - liegt.

**7.** Verwendung nach einem der Ansprüche 1 bis 6, wobei man das Gewichtsverhältnis der Carbonsäureamide b) zu dem Metallgehalt der Übergangsmetall-Verbindungen c) im Bereich von 10 : 0,1 und 10 : $10^{-7}$ einstellt.

**8.** Verwendung nach einem der Ansprüche 1 bis 7, wobei man als Polyolefin ausschließlich Polyethylen oder Polypropylen oder ein Ethylen-Propylen-Copolymer einsetzt.

**9.** Verwendung nach einem der Ansprüche 1 bis 8, wobei bei der formgebenden Verarbeitung der Polyolefine übliche weitere Hilfsstoffe zusetzt und/oder als zusätzlichen weiteren Verarbeitungsschritt auf übliche Weise eine Corona- oder Plasmabehandlung vornimmt.

**10.** Verfahren zur Herstellung von verklebten und/oder beschichteten Polyolefin-basierten Formkörpern; Fasern und Folien, **dadurch gekennzeichnet, daß** man eine Mischung enthaltend

a) überwiegend ein oder mehrere Polyolefine,

b) 0,01 bis 20 Gew.-% - bezogen auf die Polyolefine - ein oder mehrere Carbonsäureamide und

c)0,01 bis 1000 ppm ein oder mehrerer Übergangsmetall-Verbindungen - Metallgehalt der Übergangsmetall-Verbindungen bezogen auf die Polyolefine -

bei Temperaturen im Bereich von 180 bis 330 °C auf übliche Weise einer formgebenden Verarbeitung wie Extrusions-, Kalandrier-, Spritzguß-, Blasformverfahren und dergleichen unterwirft und die dabei erhaltenen Polyolefin-basierten Formkörper, Fasern und Folien mit verbesserter Klebstoff- und/oder Beschichtungs-Kompatibilität anschließend auf übliche Weise mit einem Klebstoff und/oder einer Beschichtungsmasse in Kontakt bringt, **dadurch gekennzeichnet, daß** man die Carbonsäureamide b) auswählt aus der Klasse der Amide aromatischer Carbonsäuren.

## Claims

**1.** The use of carboxylic acid amides for permanently improving the adhesive and/or coating compatibility of polyolefin-based moldings, fibers and films, a mixture containing

a) predominantly one or more polyolefins,
b) 0.01 to 20% by weight - based on the polyolefins - of one or more carboxylic acid amides and
c) 0.01 to 1000 ppm of one or more transition metal compounds - metal content of the transition metal compounds, based on the polyolefins -

being subjected in known manner to molding by extrusion, calendering, injection molding, blow molding and the like at temperatures of 180 to 330°C, **characterized in that** the carboxylic acid amides b) are selected from the class of amides of aromatic carboxylic acids.

**2.** The use claimed in claim 1, **characterized in that** polyethylene is used as component a).

**3.** The use claimed in claim 1 or 2, **characterized in that** the mixture of components a), b) and c) is molded in an extruder, the polyolefin molding being cooled by at most 50°C in 0.1 to 5.0 seconds immediately after leaving the extrusion die.

**4.** The use claimed in any of claims 1 to 3, **characterized in that** transition metal compounds c) of which the metals are selected from the group consisting of Co, Zr, Fe, Pb, Mn, Ni, Cr, V, Ce, Ti and Sn are used.

**5.** The use claimed in any of claims 1 to 4, **characterized in that** the transition metal compounds c) are selected

from the group of transition metal salts.

**6.** The use claimed in any of claims 1 to 5, **characterized in that** the transition metal compounds c) are used in a quantity below 5 mm - metal content of the transition metal compounds c), based on the polyolefins a).

**7.** The use claimed in any of claims 1 to 6, **characterized in that** the ratio by weight of the carboxylic acid amides b) to the metal content of the transition metal compounds c) is adjusted to a value of 10:0.1 to $10:10^{-7}$.

**8.** The use claimed in any of claims 1 to 7, **characterized in that** polyethylene or polypropylene alone or an ethylene/ propylene copolymer is used as the polyolefin.

**9.** The use claimed in any of claims 1 to 8, **characterized in that** other typical auxiliaries are used in the molding of the polyolefins and/or a corona or plasma treatment is carried out in the usual way as an additional processing step.

**10.** A process for the production of bonded and/or coated polyolefin-based moldings, fibers and films, in which a mixture containing

a) predominantly one or more polyolefins,
b) 0.01 to 20% by weight - based on the polyolefins - of one or more carboxylic acid amides and
c) 0.01 to 1000 ppm of one or more transition metal compounds - metal content of the transition metal compounds, based on the polyolefins -

is subjected in known manner to molding by extrusion, calendering, injection molding, blow molding and the like at temperatures of 180 to 330°C and the resulting polyolefin-based moldings, fibers and films with improved adhesive and/or coating compatibility are subsequently contacted in the usual way with an adhesive and/or a coating composition, **characterized in that** the carboxylic acid amides b) are selected from the class of amides of aromatic carboxylic acids.

## Revendications

**1.** Utilisation d'amides d'acide carboxylique pour l'amélioration permanente de la compatibilité avec des adhésifs et/ ou des revêtements de corps moulés, de fibres et de feuilles à base de polyoléfines,
dans laquelle on soumet :

a) d'une manière prédominante une ou plusieurs polyoléfines,
b) de 0,01 à 20 % en poids rapporté à la polyoléfine un ou plusieurs amides d'acide carboxylique, et
c) de 0,01 à 1000 ppm d'un ou plusieurs composés de métal de transition, teneur en métal des composés de métal de transition rapporté à la polyoléfine,

à des températures dans la zone de 180 à 330°C d'une manière usuelle, à un façonnage qui modèle tel qu'un processus d'extension, de calandrage, de coulée par injection de soufflage et similaires,
**caractérisée en ce qu'**
on choisit l'amide d'acide carboxylique b) dans la classe des amides d'acides carboxyliques aromatiques.

**2.** Utilisation selon la revendication 1,
dans laquelle on met en oeuvre en tant que composant a) du polyéthylène.

**3.** Utilisation selon la revendication 1 ou la revendication 2,
dans laquelle le façonnage qui modèle du mélange des composants a), b), c) est effectué dans une extrudeuse, en refroidissant les corps moulés en polyoléfines immédiatement après la sortie des buses de sortie, en un temps de 0,1 à 5,0 secondes au maximum de 50°C.

**4.** Utilisation selon l'une quelconque des revendications 1 à 3,
dans laquelle
on met en oeuvre des composés de métal de transition dont les métaux sont choisis dans le groupe du Co, Zr, Fe, Pb, Mn, Ni, Cr, V, Ce, Ti et Sn.

**5.** Utilisation selon l'une quelconque des revendications 1 à 4, dans laquelle les composés de métal de transition c) sont choisis dans le groupe des sels de métal de transition.

**6.** Utilisation selon l'une quelconque des revendications 1 à 5, dans laquelle on met en oeuvre les composés de métal de transition c) en une quantité qui se situe en dessous de 5 ppm de teneur en métal des composés de métal de transition c) rapporté aux polyoléfines a).

**7.** Utilisation selon l'une quelconque des revendications 1 à 6, dans laquelle on ajuste le rapport pondéral des amides d'acide carboxylique b) à la teneur en métal des composés de métal de transition c) dans la zone de 10:0,1 à $10:10^{-7}$.

**8.** Utilisation selon l'une quelconque des revendications 1 à 7, dans laquelle on met en oeuvre comme polyoléfine exclusivement du polyéthylène et du polypropylène ou un copolymère éthylène-propylène.

**9.** Utilisation selon l'une quelconque des revendications 1 à 8, dans laquelle dans le façonnage modelant des polyoléfines on ajoute d'autres adjuvants usuels, et/ou on effectue comme autre étape de façonnage supplémentaire d'une manière usuelle, un traitement par effet Corona ou par plasma.

**10.** Procédé de production de corps moulés, de fibres et de feuilles à base de polyoléfine, encollés et/ou enduits, **caractérisé en ce qu'** on soumet un mélange contenant :

a) d'une manière prédominante une ou plusieurs polyoléfines,
b) de 0,01 à 20 % en poids, rapporté à la polyoléfine d'une ou plusieurs amides d'acide carboxylique, et
c) de 0,01 à 1000 ppm d'un ou plusieurs composés de métal de transition, teneur en métal des composés de métal de transition rapporté à la polyoléfine,

à des températures dans la zone de 180 à 330°C, d'une manière habituelle à un façonnage modelant comme un processus d'extrusion, de calandrage, de coulée par injection ou de soufflage, et similaire, et on met en contact les corps moulés, les fibres et les feuilles à base de polyoléfine ainsi obtenus ayant une compatibilité améliorée avec des adhésifs et/ou avec des revêtements, ensuite d'une manière habituelle, avec un adhésif et/ou une masse de revêtement,
**caractérisé en ce qu'**
on choisit l'amide d'acide carboxylique b) dans la classe des amides d'acides carboxyliques aromatiques.